# FASCICULE DE BREVET EUROPEEN

(11) **EP 0 847 884 B1**
(45) Date de publication et mention de la délivrance du brevet: **23.05.2001**
(21) Numéro de dépôt: 97402758.3
(22) Date de dépôt: 17.11.1997
(51) Int. Cl.: B60G 3/10, B60G 11/44, F16F 1/368

(54) **Dispositif de suspension pour un train de roues de véhicule automobile**
Aufhängungsvorrichtung für eine Hinterradaufhängung eines Kraftfahrzeuges
Suspension device for the rear wheel suspension of a motor vehicle

(30) Priorité: 11.12.1996 FR 9615228
(43) Date de publication de la demande: 17.06.1998
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, 91390 Morsang Sur Orge (FR)
(74) Mandataire: Berger, Helmut

(56) Documents cités:
- DE-A- 3 205 127
- DE-A- 4 021 158
- FR-A- 2 516 455
- GB-A- 2 111 922
- US-A- 3 429 566
- PATENT ABSTRACTS OF JAPAN vol. 017, no. 106 (M-1375), 4 mars 1993 & JP 04 297313 A (NHK SPRING CO LTD), 21 octobre 1992,
- PATENT ABSTRACTS OF JAPAN vol. 017, no. 106 (M-1375), 4 mars 1993 & JP 04 297312 A (NHK SPRING CO LTD), 21 octobre 1992,
- PATENT ABSTRACTS OF JAPAN vol. 014, no. 323 (M-0997), 11 juillet 1990 & JP 02 109709 A (MAZDA MOTOR CORP), 23 avril 1990,
- PATENT ABSTRACTS OF JAPAN vol. 013, no. 320 (M-853), 20 juillet 1989 & JP 01 106715 A (MAZDA MOTOR CORP), 24 avril 1989,
- PATENT ABSTRACTS OF JAPAN vol. 016, no. 391 (M-1298), 19 août 1992 & JP 04 129813 A (NHK SPRING CO LTD), 30 avril 1992,

## Description

L'invention concerne un dispositif de suspension pour un train de roues de véhicule automobile, du type dans lequel chaque roue est portée par une jambe télescopique reliée à la structure du véhicule par une articulation supérieure et par un bras inférieur élastique en un matériau composite et formant ressort de suspension.

Un dispositif de suspension de ce type est connu par le brevet français N° 2 516 455. Ce type de dispositif présente l'avantage que le nombre des pièces qui le constituent est réduit et que l'encombrement de celles-ci dans le passage de roues est peu important. Mais l'utilisation de bras inférieurs élastiques réalisés sous forme de lames en un matériau composite, pour assurer la fonction de ressort de suspension n'est pas particulièrement favorable au filtrage longitudinal de la roue. Ce problème est occasionné par la disposition de ces lames élastiques.

La présente invention a pour but de proposer une solution au problème qui vient d'être énoncé.

Pour atteindre ce but, chaque bras inférieur élastique est formé par la branche inférieure d'une lame en un matériau composite qui présente la forme générale d'un U, s'étend verticalement et dont la branche supérieure est adaptée pour recevoir l'articulation supérieure.

Selon une caractéristique de l'invention, le tronçon médian de la lame, qui s'étend sensiblement verticalement, est relié aux branches supérieure et inférieure par des tronçons incurvés et est fixé à la structure du véhicule par deux attaches espacées verticalement.

Selon une autre caractéristique avantageuse de l'invention, le tronçon incurvé inférieur présente la forme générale d'un C et est fixé à la structure du véhicule par l'une des deux attaches précitées et participe ainsi à l'effet de ressort de suspension du bras.

Selon encore une autre caractéristique avantageuse de l'invention, les deux attaches précitées sont fixées à une traverse de la structure du véhicule, elle-même fixée à la caisse du véhicule par deux autres attaches.

Selon encore une autre caractéristique avantageuse de l'invention, une liaison d'articulation souple est agencée entre le bras inférieur élastique et une barre anti-dévers, avantageusement avec interposition d'un flasque métallique.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :

La figure 1 est une vue en perspective d'un dispositif de suspension du train de roues avant d'un véhicule automobile, selon la présente invention.

La figure 2 est une vue à plus grande échelle de la partie indiquée par la flèche II sur la figure 1.

La figure 3 est une vue en coupe et à plus grande échelle, avec arrachement, le long de la ligne III-III de la figure 1.

La figure 4 est une vue à plus grande échelle et plus détaillée en direction de la flèche IV de la figure 3.

La figure 5 est une vue de dessus de la figure 4, avec coupe partielle le long de la ligne V-V de la figure 4.

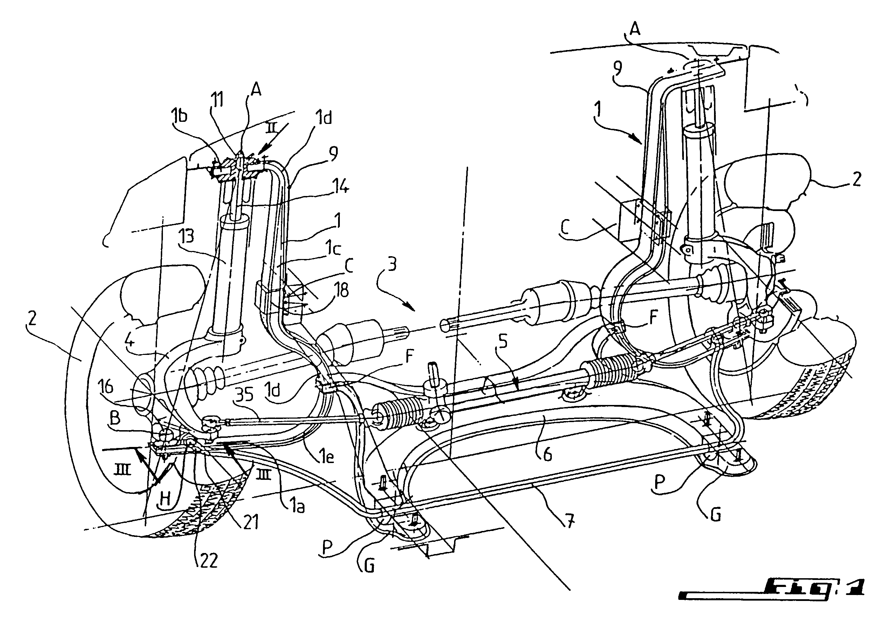

La figure 1 représente un train avant d'un véhicule automobile, sensiblement du type MAC PHERSON, dans lequel une lame de ressort 1 est associée à chaque roue. Cette lame assure les fonctions de bras transversal inférieur et de ressort de suspension. Les chiffres de référence 3 à 6 désignent respectivement le dispositif d'entraînement en rotation des roues 2, le pivot de chaque roue, le mécanisme de direction des roues, une traverse faisant partie de la structure du véhicule et une barre anti-divers.

La lame de ressort 1 qui est réalisée en un matériau composite présente la forme générale d'un U dont les branches inférieure et supérieure sont désignés respectivement par 1a et 1b, tandis que la partie médiane porte la référence 1c et est reliée aux tronçons formant les branches supérieure et inférieure par des tronçons incurvés 1d et 1e, ce dernier présentant la forme d'un C. La lame 1 ainsi configurée est contenue dans un plan sensiblement vertical et transversal à l'axe du véhicule.

Comme on le voit sur la figure, la branche 1b de la lame en U est fixée rigidement en A à la caisse du véhicule, indiquée en 9, en haut du passage de roue, et reçoit directement la charge verticale de la caisse. Elle maintient en A par une liaison élastique 11 l'articulation supérieure de l'axe de pivotement de l'ensemble formé par le corps de pivot 4 qui maintient et guide la roue 2 et est lié rigidement au cylindre 13 d'un amortisseur dont la tige 14 est reliée axialement à l'articulation 11.

La partie inférieure 1a de la lame 1 qui assure la fonction ressort de suspension ainsi que celle de bras transversal est reliée en B au pivot H par une rotule 16 sur laquelle elle prend appui pour transmettre vers le haut verticalement au point A l'effort de suspension, c'est-à-dire la réaction opposée à la charge sur la roue. Il est à noter que l'élasticité de la branche 1a de la lame 1 est telle que cette branche inférieure tende à s'ouvrir vers le bas et ainsi à s'opposer aux efforts de réaction appliqués à la roue au niveau de son appui sur le sol.

Afin d'assurer une bonne cinématique de débattement de la roue 2, la lame 1, pour accomplir sa fonction de bras inférieur, est reliée rigidement dans sa partie centrale 1c en C à la caisse 9 par un collier 18 ou tout autre moyen assurant la même fonction. La partie centrale du tronçon 1e en forme d'un C est reliée en F à la traverse 6 qui assure ainsi la liaison des points d'articulation F des deux lames 1. Elle a un rôle d'entretoise entre ces deux lames. La traverse 6 est encore reliée à ses deux extrémités en G à la caisse 9. L'ensemble des liaisons A,C et F de la lame 1 sur la caisse empêche celle-ci de pivoter autour de l'axe de pivotement fictif de roue passant par les points d'articulation A,B.

On constate que la traverse 6 permet en outre de supporter, par fixation rigide, le mécanisme de direction 5. Cette traverse permet de maintenir les efforts transversaux agissant sur les roues avant et d'avoir d'une façon fictive un axe d'articulation horizontal de la branche inférieure 1a de la lame 1, qui n'évolue pas en position par rapport à la caisse 9, sous les efforts transversaux qui agissent sur la roue et qui risqueraient de perturber l'épure de pincement des roues lors des débattements verticaux de la roue par rapport à la caisse. Il est encore à noter que l'axe de pivotement directionnel de la roue 2 est contenu dans la droite passant par les points communs A, B du pivot 4 et de la lame 1.

La barre anti-devers 7 s'articule par un axe passant par le centre de deux articulations élastiques de deux paliers P liés rigides à la caisse, qui peuvent, comme le montre la figure 1, faire partie de la traverse 6. Chaque branche d'extrémité 21 de la barre anti-devers 7 est reliée élastiquement en H à la lame 1, près de l'extrémité de la branche inférieure la de celle-ci, et assure le maintien des efforts longitudinaux que subit la roue et qui sont transmis par la rotule 16 à la lame. La liaison élastique 22 de la barre 7 sur la lame 1, au point d'articulation H, est suffisamment élastique pour permettre, sous les efforts longitudinaux agissant sur la roue 2, un léger déplacement longitudinal suivant l'axe du véhicule, de l'extrémité de la branche inférieure la de la lame 1, ce qui assure un bon filtrage longitudinal dans le plan horizontal des chocs que subit la roue.

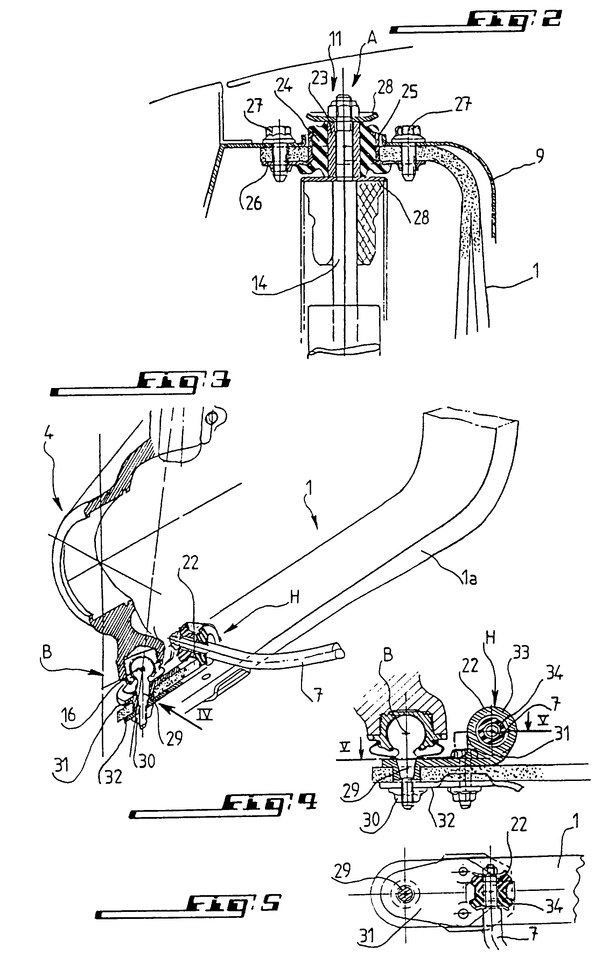

Après la description globale du dispositif de suspension selon l'invention, tel que représentée sur la figure 1, on décrira ci-après plus en détail les articulations en A, B et H, en se reportant aux figures 2 à 5.

La figure 2 représente la liaison supérieure 11 au point A. On constate que l'extrémité supérieure de la tige d'amortisseur 14 est vissée dans une douille 23 reçue dans un manchon en un matériau élastique 24, lui-même monté concentriquement dans une douille 25 pourvue à son extrémité inférieure d'une bride circulaire 26 permettant la fixation à la branche supérieure 1b de la lame 1 et à la caisse 9 à l'aide de deux vis de serrage par pincement de la lame sur caisse, indiquées en 27. A la partie filetée de fixation de la tige 14 sont associées deux rondelles de butée axiale 28 agissant respectivement dans les deux sens.

La figure 3 représente la liaison inférieure B de la branche inférieure la de la lame 1 au pivot 4 au moyen de la rotule 16 dont la queue 29 permet de serrer par pincement la lame 1, à l'aide d'un écrou 30 et de flasques supérieur 31 et inférieur 32. Le flasque supérieur 31 comporte une partie en forme d'anneau 33 qui reçoit une articulation élastique 34 d'axe sensiblement parallèle à la direction longitudinale du véhicule, montée sur le bout de la barre anti-devers 7.

Il ressort de la description qui précède que le dispositif selon l'invention procure de nombreux avantages qui ont déjà été évoqués au cours de la description et auxquels s'ajoute le fait que la traverse 6 dans son rôle de liaison des côtés gauche et droite est d'une conception simple et légère, et qu'elle permet en outre un prémontage de l'ensemble du train avant, ce qui facilite le montage en série sur les caisses. D'autre part, le train de roues décrit peut aussi être adapté à un train arrière en supprimant le mécanisme de direction et en remplaçant la bielle 35 de ce mécanisme par une bielle de suspension, et les rotules par des articulations élastiques.

## Revendications

1. Dispositif de suspension pour un train de roues de véhicule automobile, du type dans lequel chaque roue est portée par une jambe télescopique reliée à la structure du véhicule par une articulation supérieure et par un bras inférieur élastique en forme d'une lame formant ressort de suspension, caractérisé en ce que le bras inférieur élastique est formé par la branche inférieure (1a) d'une lame (1) en un matériau composite qui présente la forme générale d'un U, s'étend verticalement et dont la branche supérieure (1b) est adaptée pour recevoir l'articulation supérieure (11).

2. Dispositif de suspension selon la revendication 1, caractérisé en ce que le tronçon médian (1c) de la lame (1) qui s'étend sensiblement verticalement, est relié aux branches supérieure (1b) et inférieure (1a) par des tronçons incurvés (1d) et (1e) et est fixé à la structure du véhicule par deux attaches (C, F) espacées verticalement.

3. Dispositif de suspension selon la revendication 2, caractérisé en ce que le tronçon incurvé inférieur (1e) présente la forme générale d'un (C) et est fixé à la structure du véhicule par l'une (F) des deux attaches précitées (C, F) et participe ainsi à l'effet de ressort de suspension du bras.

4. Dispositif de suspension selon l'une des revendications 2 ou 3, caractérisé en ce que les deux attaches inférieures (F) du train de roues sont fixées à une traverse (6) de la structure du véhicule, elle-même fixée à la caisse (9) du véhicule par deux autres attaches (G).

5. Dispositif de suspension selon l'une des revendications précédentes, caractérisé en ce qu'une liaison souple (22) est agencée entre le bras inférieur élastique (1a) et une barre anti-devers (7), avantageusement avec interposition d'un flasque métallique (31).

6. Dispositif de suspension selon la revendication 5, caractérisé en ce que la liaison souple (22) est une articulation élastique (34) d'axe sensiblement parallèle à la direction longitudinale du véhicule.

## Patentansprüche

1. Aufhängungsvorrichtung für eine Hinterradaufhängung eines Kraftfahrzeugs, der Art, in der jedes Rad durch ein Teleskopbein getragen wird, das mit der Fahrzeugstruktur durch eine obere Artikulation und durch einen unteren elastischen Arm in Form einer Lamelle verbunden ist, die eine Federaufhängung bildet; dadurch gekennzeichnet, daß der untere elastische Arm durch den unteren Schenkel (1a) einer Lamelle (1) aus einem Verbundmaterial gebildet wird, der die allgemeine Form eines Us aufweist, sich vertikal erstreckt und dessen oberer Schenkel (1b) angepaßt ist, um die obere Artikulation (11) aufzunehmen.

2. Aufhängungsvorrichtung gemäß Anspruch 1, dadurch gekennzeichnet, daß der mittlere Abschnitt (1c) der Lamelle (1), der sich deutlich vertikal erstreckt, mit dem oberen (1b) und unteren (1a) Schenkel durch gekrümmte Abschnitte (1d) und (1e) verbunden ist und an der Fahrzeugstruktur durch zwei vertikal entfernte Befestigungen (C, F) befestigt ist.

3. Aufhängungsvorrichtung gemäß Anspruch 2, dadurch gekennzeichnet, daß der untere gekrümmte Abschnitt (1e) die allgemeine Form eines (Cs) aufweist und an der Fahrzeugstruktur durch eine (F) der zwei vorgenannten Befestigungen (C, F) befestigt ist und somit an der Federwirkung der Aufhängung des Arms beteiligt ist.

4. Aufhängungsvorrichtung gemäß Anspruch 2 oder 3, dadurch gekennzeichnet, daß die zwei unteren Befestigungen (F) der Hinterradaufhängung an einer Querstrebe (6) der Fahrzeugstruktur befestigt sind, die ihrerseits durch zwei andere Befestigungen (G) am Wagenkasten (9) befestigt sind.

5. Aufhängungsvorrichtung gemäß einem der vorgenannten Ansprüche, dadurch gekennzeichnet, daß eine flexible Verbindung (22) zwischen dem unteren elastischen Arm (1a) und einer Anti-Achssturzstange (7) vorteilhaft mit Zwischenschaltung einer Metallzierblende (31) angeordnet ist.

6. Aufhängungsvorrichtung gemäß Anspruch 5, dadurch gekennzeichnet, daß die flexible Verbindung (22) eine zur Längsrichtung des Fahrzeugs deutlich parallele elastische Achsartikulation (34) ist.

## Claims

1. Suspension device for a wheel set of a motor vehicle, of the type in which each wheel is carried by a telescopic leg connected to the vehicle structure by means of an upper articulation and a resilient lower arm shaped as a suspension spring forming blade, characterized in that the resilient lower arm is formed by the lower branch (1a) of a blade (1) in composite material which has the general shape of a U, is vertically extended and the upper branch (1b) of which is adapted for receiving the upper articulation (11).

2. Suspension device according to claim 1, characterized in that the median portion (1c) of the blade (1) which is extended substantially vertically, is connected to the upper (1b) and lower (1a) branches by means of curved portions (1d) and (le) and is fixed to the vehicle structure by means of two vertically spaced clamps (C, F).

3. Suspension device according to claim 2, characterized in that the lower curved portion (le) has the general shape of a (C) and is fixed to the vehicle structure by one (F) of the two above-mentioned clamps (C, F) and thus participates to the suspension spring effect of the arm.

4. Suspension device according to one of claims 2 or 3, characterized in that the two lower clamps (F) of the wheel set are fixed to a crossbeam (6) of the vehicle structure, itself fixed to the vehicle body (9) by means of two other clamps (G).

5. Suspension device according to one of the preceding claims, characterized in that a flexible connection (22) is arranged between the resilient lower arm (1a) and an anti-slope bar (7), advantageously with interposition of a metal flange (31).

6. Suspension device according to claim 5, characterized in that the flexible connection (22) is a resilient articulation (34) with an axis that is substantially parallel to the longitudinal direction of the vehicle.
